# EUROPEAN PATENT APPLICATION

(11) **EP 2 522 462 A1**
(43) Date of publication of application: **14.11.2012**
(21) Application number: 12158062.5
(22) Date of filing: 05.03.2012
(51) Int. Cl.: B25B 9/00, B25B 11/00, B25B 27/14, B25B 31/00, F16L 3/123

(54) **Clamp installation tool**

(30) Priority: 11.05.2011 US 201161484877 P; 27.02.2012 US 201213406156
(71) Applicant: Raytheon Company, Waltham, MA 02451 (US)
(72) Inventor: Oestreicher, Eric D., Hermosa beach, CA California 90254 (US); Rimando, Olimpio, West Hills, CA California 91307-1528 (US); Arucan, Daniel, Redondo Beach, CA California 90277 (US)
(74) Representative: Murphy, Colm Damien

(57) **Abstract**

Described is a clamp installation tool (100) and methods related thereto. In some examples, the tool includes a notch section (132) adapted to capture an engagement end of a loop clamp (200) in a closed position and adapted to capture a mounting mechanism (220) for engaging the loop clamp to a mounting surface (230). The tool further includes a handle section (110) angularly connected to the notch section (132) and adapted to hold the closed loop clamp (200) on the mounting surface (230).

## Description

### RELATED APPLICATION

This application claims the benefit of U.S. Provisional Application No. 61/484,877, filed on 05/11/2011. The entire teachings of the above application are incorporated herein by reference.

### GOVERNMENT SUPPORT

The invention was supported, in whole or in part, by a grant F33657-91-C-0006 from the Department of Defense. The Government has certain rights in the invention.

### BACKGROUND

Clamps are commercial off-the-shelf (COTS) parts and/or specialty-made parts. Clamps are generally used for securing piping and/or cabling in military and commercial applications (e.g., cabling in a building, cabling in an aircraft, etc.). Clamps (e.g., loop clamps, hose clamps, spring clamp, etc.) are generally challenging to close due to the tight grip needed to hold the cabling and/or piping. In other words, a large amount of force is generally needed to create the tight grip required on the cabling and/or piping for installation in extreme environments (e.g., high vibration, high movement, etc.). Clamps can be installed in fragile and/or difficult-to-access environments (e.g., on treated surfaces, in space-confined environments, etc.) which increases the challenges associated with installation of the clamps. As such, there is a need in the art for an improved clamp installation tool.

### SUMMARY

An approach to securing a clamp onto a mounting surface utilizes a clamp installation tool. The tool includes a notch section adapted to capture an engagement end of a loop clamp in a closed position and adapted to capture a mounting mechanism for engaging the loop clamp to a mounting surface. The tool further includes a handle section angularly connected to the notch section and adapted to hold the closed loop clamp on the mounting surface.

Another approach to securing a clamp onto a mounting surface utilizes a clamp installation tool. The tool includes a notch section. The notch section includes two opposed tabs. Each tab has three walls defining a cavity adapted to engage a flange of a loop clamp in a closed position and spaced apart at a first distance. The notch section further includes a notch having an opening sized to the first distance and adapted to accept a connection mechanism adapted to secure the loop clamp to a mounting mechanism. The tool further includes a handle section connected to the notch section and including a linear shaft extending away from the notch section.

Another approach to installing a clamp onto a mounting surface includes a method. The method includes placing a clamp installation tool over flanges of the loop clamp in a closed position; positioning the loop clamp on a mounting surface via the clamp installation tool; mounting the loop clamp to the mounting surface via a connection mechanism; and removing the clamp installation tool from the loop clamp.

In other examples, any of the approaches above can include one or more of the following features.

In some examples, the tool further includes an angular section adapted to angularly connect the handle section to the notch section and align the loop clamp with the mounting mechanism.

In other examples, a top flange of the loop clamp abuts a bottom flange of the loop clamp when the notch section captures the engagement end of the loop clamp in the closed position.

In some examples, the notch section is approximately axially aligned to a top hole of a loop clamp and a bottom hole of the loop clamp upon the notch section engaging the loop clamp.

In other examples, the tool is constructed as a single unitary piece.

In some examples, the tool further includes an adjustable mechanism connected to the two opposed tabs and adapted to modify the first distance by moving one or more of the two opposed tabs.

In other examples, the two opposed tabs hold the flange of the loop clamp for securely maintaining the loop clamp on and in engagement with the mounting surface and allowing the connection mechanism to be tightened for securing the loop clamp to the mounting surface.

In some examples, the two opposed tabs cradle the flange of the loop clamp allowing the notch section to sit flush with the mounting surface.

In other examples, the tool is constructed as a single unitary piece.

In some examples, the method further includes placing the clamp installation tool over the flanges of the loop clamp securely maintains the flanges together for positioning the loop clamp on and in engagement with the mounting surface and allowing the connection mechanism to be tightened for securing the loop clamp to the mounting surface.

In other examples, the method further includes tightening the connection mechanism onto the mounting surface to secure the loop clamp to the mounting surface.

The clamp installation tool described herein can provide one or more of the following advantages. An advantage of the technology is that the tool can increase the effective applications of clamps (e.g., small spaces, sensitive components, etc.) which increases the efficient uses of the tool and decreases the cost of installing a clamp. Another advantage of the technology is that the tool can decrease the possibility of damage to cable and/or wire which increases the efficient uses of the tool and decreases the cost of installing a clamp. Another advantage of the technology is that the tool can prevent scratches, nicks, etc. on the mounting surface and/or the cable and/or a pipe by securely holding the clamp during the installation process, thereby decreasing the cost associated with fixing installation mistakes.

Other aspects and advantages of the present invention will become apparent from the following detailed description, taken in conjunction with the accompanying drawings, illustrating the principles of the invention by way of example only.

### BRIEF DESCRIPTION OF THE DRAWINGS

The foregoing and other objects, features and advantages will be apparent from the following more particular description of the embodiments, as illustrated in the accompanying drawings in which like reference characters refer to the same parts throughout the different views. The drawings are not necessarily to scale, emphasis instead being placed upon illustrating the principles of the embodiments.

FIG. 1 illustrates a perspective view of an exemplary clamp installation tool;

FIG. 2 illustrates another perspective view of the exemplary clamp installation tool of FIG. 1;

FIGS. 3A - 3E illustrate an exemplary installation process of a cable clamp onto a mounting surface utilizing a clamp installation tool;

FIG. 4A - 4C illustrate an exemplary installation process of a cable clamp onto a mounting surface utilizing a clamp installation tool;

FIG. 5 illustrates another exemplary clamp installation tool;

FIG. 6 illustrates a top view of another exemplary clamp installation tool;

FIGS. 7A-7B illustrate a top view of an exemplary adjustable clamp installation tool;

FIG. 8 illustrates a side view of an exemplary scissor-type clamp installation tool; and

FIGS. 9A-9G illustrate another exemplary installation process of a clamp on a cable using a clamp installation tool.

### DESCRIPTION

A clamp installation tool, generally, holds clamps (e.g., loop clamps, wire clamps, etc.) in a closed position for installation, thereby providing compression of the clamp and/or alignment of the clamp for the installation process. The tool (also referred to as a device) can be utilized to hold the clamp during the installation process (e.g., screw is tightened, nut is tightened, etc.) on a mounting surface (e.g., wall of an aircraft, floor of a ship, electronics control board, etc.). The tool can hold the clamp while the clamp is positioned and installed in challenging installation environments (e.g., limited space, limited visibility, limited mobility, next to a sensitive component, in space-confined location, etc.).

The tool can assist in the installation process of the clamp (e.g., loop clamp in a space-confined location) thereby reducing a two-person operation to a one-person operation advantageously reducing the cost of the installation process. The tool can advantageously reduce the amount of force required to close the clamp, thereby increasing the locations for efficient installation of clamps. The tool can advantageously increase maneuverability in tight spaces thereby enabling installation by a single person (e.g., one hand on the tool and one hand on the installation device), which further increases the locations for efficient installation of clamps and decreasing installation errors. The tool can advantageously increase the effective applications of the clamps while decreasing the possibility of damaging to the cable and/or wire, thereby increasing the efficient uses of the tool and decreasing the cost of installing a clamp. The tool can advantageously prevent scratches, nicks, etc. on the mounting surface and/or the cable and/or pipe by securing holding the clamp during the installation process, thereby decreasing the cost associated with fixing installation mistakes (e.g., slipped screwdriver scratching a treated mounting surface, slipped pliers nicking an electrical wire, etc.).

In some examples, the tool closes the clamp over the cable and/or pipe before installation of the clamp. In other examples, another mechanical tool (e.g., pliers, crimp tool, etc.) closes the clamp over the cable and/or pipe.

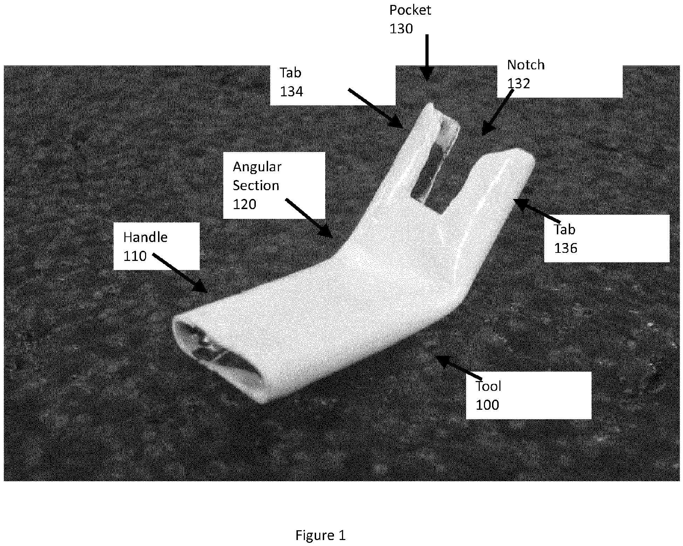

FIG. 1 illustrates a perspective view of an exemplary clamp installation tool 100. The tool 100 includes a handle 110, an angular section 120, and a pocket 130 (also referred to as a notch section). The pocket 130 includes a notch 132 and two tabs 134 and 136. The pocket 130 holds flanges of a clamp in a relatively closed position during the installation process. The pocket 130 can reduce any slippage of the tool 100 and/or the mounting mechanism during installation of the clamp, thereby advantageously reducing potential damage to the pipe and/or wire and/or the mounting surface. For example, the clamp can be used during the installation process of a clamp in an aeronautical or space craft since the installation area is generally crowded with sensitive components (e.g., data cable, high-power cable, electronics, etc.) and the mounting surface is generally coated with a protective material (e.g., rubber, rust resistive coating, etc.).

The two tabs 134 and 136 can be sized to securely hold the clamp together (i.e., closed) during the installation process. For example, if the height of the flanges is 2 millimeters, the tabs are approximately 2 millimeters in height (e.g., 2.001 millimeters, 2.1 millimeters, etc.). As another example, if the height of the flanges is 3 millimeters, the tabs are 4 millimeters in height. The two tabs 134 and 136 can cradle the flange of the loop clamp allowing the bottom of the tool 100 (i.e., the pocket 130) to sit flush with the mounting surface. The placement of the bottom of the tool 100 flush with the mounting surface advantageously enables the tool 100 to be utilized in small spaces, thereby increasing the effective uses and placement areas for the tool 100.

The notch 132 enables the installation of the flange on a mounting surface via a mounting mechanism (e.g., bolt, screw, fastener, spring fastener, pin fastener, etc.). The notch 132 can be sized to enable the mounting mechanism in between the two tabs 134 and 136. The notch 132 enables the mounting mechanism to be utilized on the clamp while the clamp is being held closed around the cable and/or pipe. The notch 132 enables the mounting mechanism to be engaged with the mounting surface while the clamp is being held closed around the cable and/or the pipe. The notch 132 enables the tool 100 to be removed from the clamp while the clamp is being held in place by the partial or complete engagement of the mounting mechanism with the mounting surface. For example, if the mounting mechanism is 10 millimeters, the notch 132 is 11 millimeters wide. As another example, if the mounting mechanism is 8 millimeters, the notch 132 is 20 millimeters wide. Although FIG. 1 is described with respect to various exemplary sizes of the tool 100, the tool 100 can be sized based on the clamp and/or mounting mechanism.

In some examples, the two tabs 134 and 136 are two opposed tabs which advantageously secures the flanges of a clamp together for installation of the clamp onto a mounting surface. Each tab 134 or 136 can have three walls (as illustrated in FIG. 1) defining a cavity adapted to engage the flange of the loop clamp in a closed position. The two tabs 134 and 136 are spaced apart at a distance. In other examples, the notch 132 has an opening sized to the distance and adapted to accept the connection mechanism adapted to secure the loop clamp to the mounting mechanism. In some examples, the two opposed tabs 134 and 136 hold the flange of the loop clamp for securely maintaining the loop clamp on and in engagement with the mounting surface and allowing the connection mechanism to be tightened for securing the loop clamp to the mounting surface.

In other examples, the tool 100 includes an adjustable mechanism (not shown) connected to the two opposed tabs 134 and 136. The adjustable mechanism modifies the distance by moving one or more of the two opposed tabs 134 and/or 136. The adjustment of the tabs 134 and/or 136 enables the tool 100 to fit on different size clamps thereby increasing the effective uses of the tool 100.

In some examples, the handle 110 (also referred to as a handle section) is connected to the notch 132 (also referred to as the notch section) and includes a linear shaft extending away from the notch 132. In other examples, the handle 110 is a curved shaft extending away from the notch 132. In some examples, the tool 100 is constructed as a single unitary piece (e.g., metal, plastic, etc.). The construction of the tool 100 as a single unitary piece advantageously decreases the manufacturing price of the tool 100 and decreases the overall size of the tool 100.

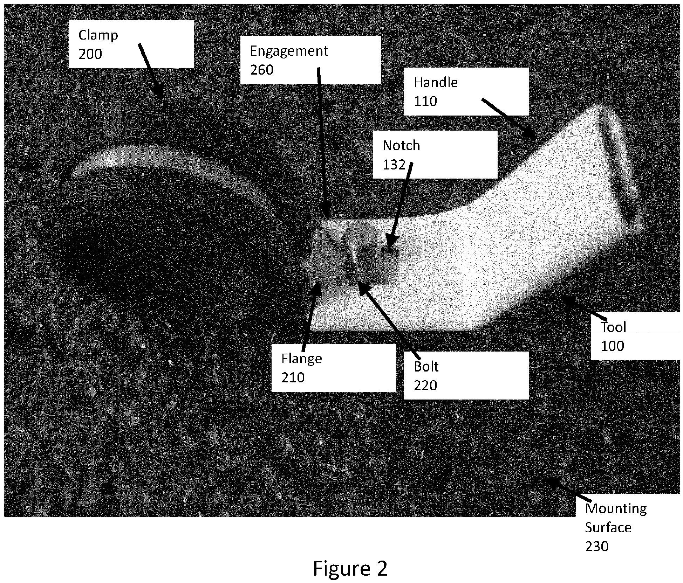

FIG. 2 illustrates another perspective view of the exemplary clamp installation tool 100 of FIG. 1. The tool of FIG. 2 is engaged (260) with a clamp 200. The pocket 130 fits over a flange 210 of the clamp 200 and the flange 210 of the clamp 200 is placed over a bolt 220 (a type of connection mechanism) on a mounting surface 230.

In some examples, the bottom of the tool 100 is flat. The flat bottom of the tool 100 can advantageously enable the tool 100 to be placed against flat mounting surfaces and/or in tight places. In other examples, the bottom of the tool 100 is angled based on the flange 210 of the clamp 200.

In some examples, the handle 110 of the tool 100 is shorter than the height of the clamp 200 (e.g., 45 millimeters, 200 millimeters, etc.) and/or some multiple thereof (e.g., 1.5 x the height of the clamp, 2 x the height of the clamp, etc.). The short handle of the tool 100 can advantageously enable the tool 100 to be used in space-confined environments while still handling the clamp 200 securely. In other examples, the handle of the tool 100 is long (e.g., 100 centimeters, 80 centimeters, etc.) to enable the tool 100 to be utilized in hard-to-reach environments.

In some examples, the tool 100 is sized based on the size of the clamp 200. The clamp 200 can be sized based on the cable and/or pipe size (e.g., bundle size, tube diameter, etc.). In other examples, the tool 100 is made of a metal, a composite, a plastic, and/or any other type of material. For example, the tool 100 is made of a plastic to reducing any potential damage to the mounting surface 230. In some examples, the tool 100 is coated with a material (e.g., plastic coating on a metal base, rubber coating on a composite base, etc.). The material coating can reduce static, decrease a coefficient of friction between the tool 100 and the mounting surface 230, decrease scratches on the mounting surface 230, and/or any other type of protective mechanism.

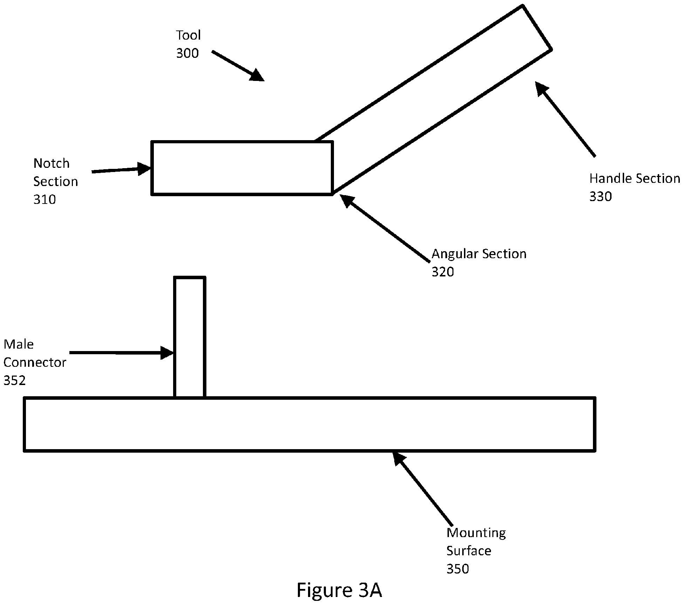

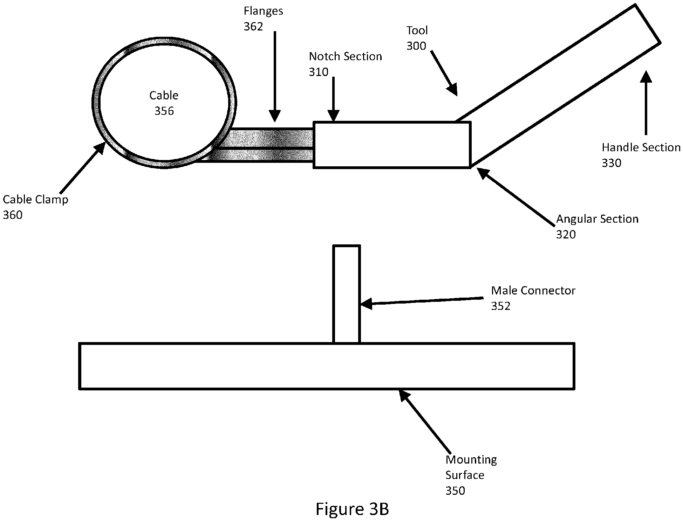

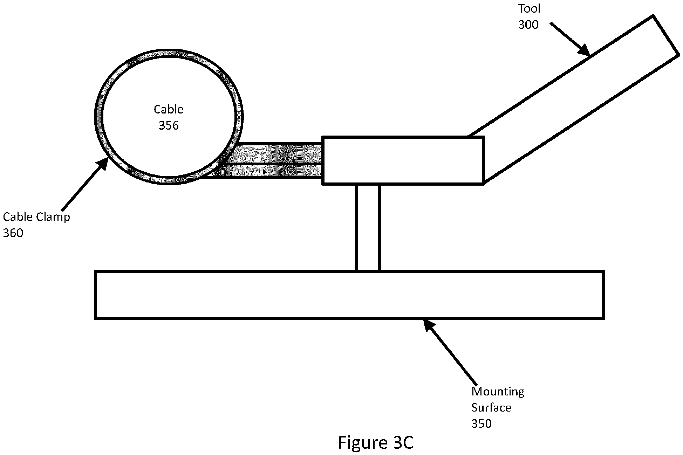

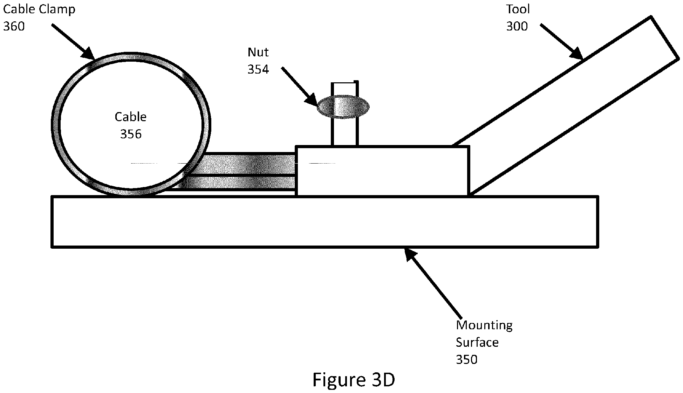

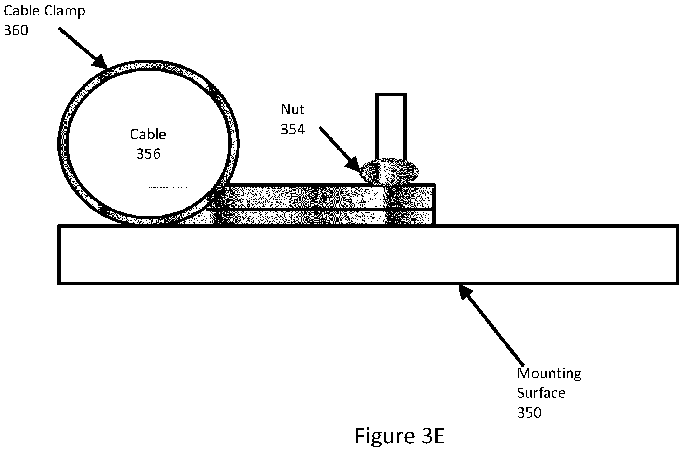

FIGS. 3A - 3E illustrate an exemplary installation process of a cable clamp 360 onto a mounting surface 350 utilizing a clamp installation tool 300. The tool 300 includes a notch section 310, an angular section 320, and a handle section 330. The notch section 310 includes a pocket, and the pocket includes two tabs and a notch. The installation process includes the closing of the cable clamp flanges 362 within the notch section 310 as illustrated in FIG. 3B, the placement of the cable clamp 360 onto the male connector 352 via the tool 300 as illustrated in FIG. 3C, the holding of the cable clamp 360 on the mounting surface 350 via the tool 300 as a nut 354 is tightened on the male connector 352 as illustrated in FIG. 3D, and the removing of the tool 300 as the nut 354 is tightened onto the male connector 352 as illustrated in FIG. 3E.

The tool 300 advantageously enables the male connector 352 to be shorter in length (e.g., 2 millimeters longer than the height of the clamp flange plus the height of the nut, 10% longer than the height of the clamp flange plus the height of the nut, etc.) due to the ability to hold the cable clamp 360 closed during installation of the cable clamp 360 on the mounting surface 350. The shorter length of the male connector 352 advantageously reduces the risk of the male connector 352 damaging the cable 356 and/or any other nearby components. The shorter length of the male connector 352 advantageously reduces the risk of debris (e.g., metal shavings, plastic shavings, etc.) contaminating the cable 356 and/or other components in the installation environment (e.g., shorting an electrical connection, interfering with a mechanical mechanism, etc.).

In some examples, the notch section 310 and the handle section 330 of the tool are connected via the angular section 320. The angular section 320 can connect the notch section 310 and the handle section 330 at an angle (e.g., 45 degrees, 85 degrees, etc.) based on space constraints associated with the installation environment. In some examples, the angular section 320 is flexible to allow for various angles (e.g., 40-65 degrees of flexibility, 20-85 degrees of flexibility, etc.). For example, if another device is adjacent to the male connector 352, the angular section 320 is close to 90 degrees to avoid the adjacent device. In some examples, the notch section 310 is sized and/or positioned based on the male connector (e.g., size, position, etc.). In other examples, the handle section 330 is sized and/or positioned based on the installation environment (e.g., sticky material on the handle section for high heat/humidity installation environment to reduce slippage, small handle section for space-confined installation environment, etc.).

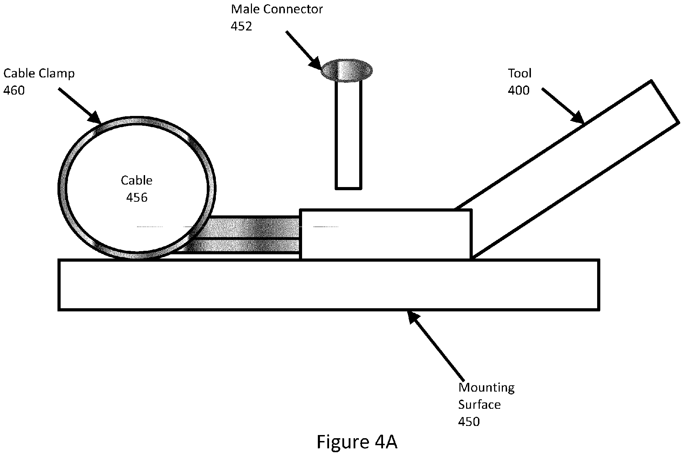

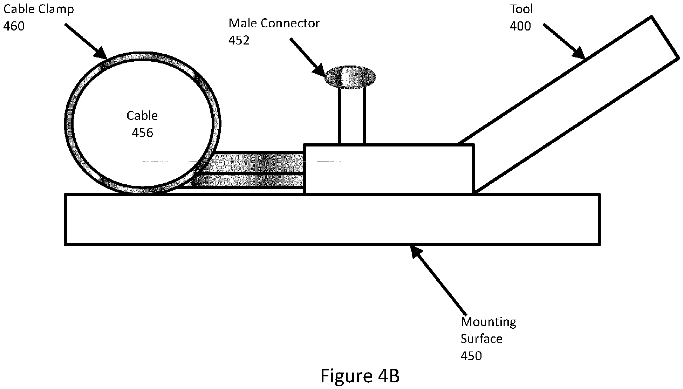

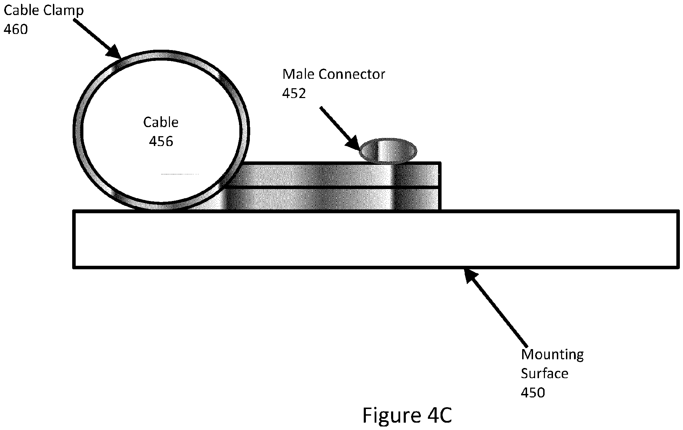

FIG. 4A - 4C illustrate an exemplary installation process of a cable clamp 460 onto a mounting surface 450 utilizing a clamp installation tool 400. The installation process includes the closing of the cable clamp flanges within a notch section and the placement of the cable clamp onto a mounting surface as illustrated in FIG. 4A, the holding of the cable clamp on the mounting surface via the tool as a male connector 452 is tightened on a female connector (not shown) in the mounting surface 450 as illustrated in FIG. 4B to hold a cable 456 on the mounting surface 450, and the removing of the tool 400 as the male connector 452 is tightened onto the female connector as illustrated in FIG. 4C.

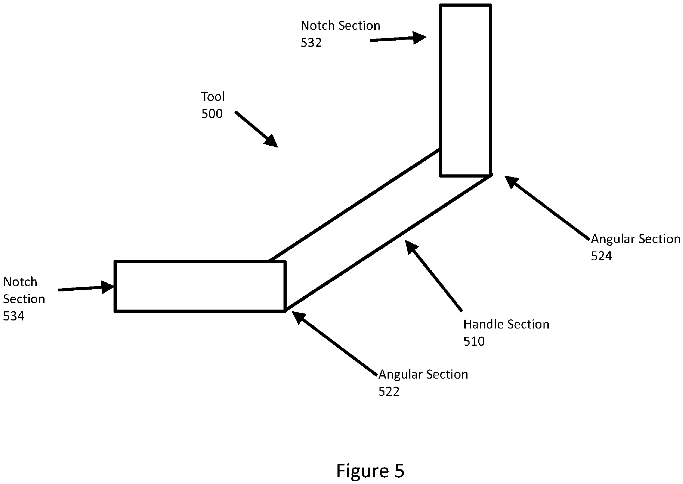

FIG. 5 illustrates another exemplary clamp installation tool 500. The tool 500 includes two notch sections 532 and 534, two angular sections 522 and 524, and a handle section 510. The two notch sections 532 and 534 can be the same sizes and/or different sizes (e.g., for different size clamps). The two angular sections 522 and 524 can be the same angle and/or different angles (e.g., for different installation environments, etc.). For example, the first notch section 532 is sized for a 10 millimeters loop clamp and the second notch section 534 is sized for a 20 millimeters loop clamp. As another example, the first angular section 522 is angled at 45 degrees and the second angular section 524 is angled at 63 degrees.

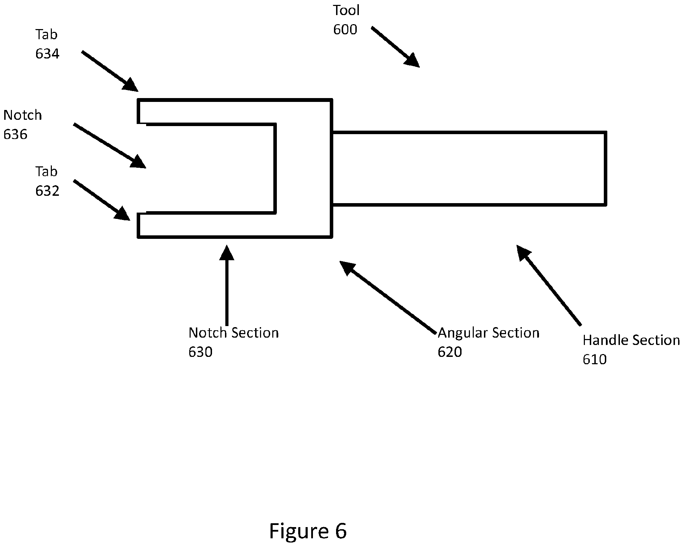

FIG. 6 illustrates a top view of another exemplary clamp installation tool 600. The tool 600 includes a notch section 630, an angular section 620, and a handle section 610. The notch section 630 includes a pocket, and the pocket includes two tabs 632 and 634 and a notch 636. The pocket is sized to engage a flange of a clamp. The notch 636 is sized to allow access to a mounting mechanism (e.g., female connector, male connector, etc.). The opening of the notch 636 can be smaller than the width of the clamp, and the height of the openings in the tabs 632 and 634 can be slightly taller than the height of the two clamp flanges when the flanges are flush (i.e., in a closed position). The depth of the opening of the tabs 632 and 634 can be at least as deep as the length of the clamp flanges. The sizing of the tabs 632 and 634 and/or the notch 636 can enable the clamp flanges to fit snugly into the tool 600 when the clamp is closed.

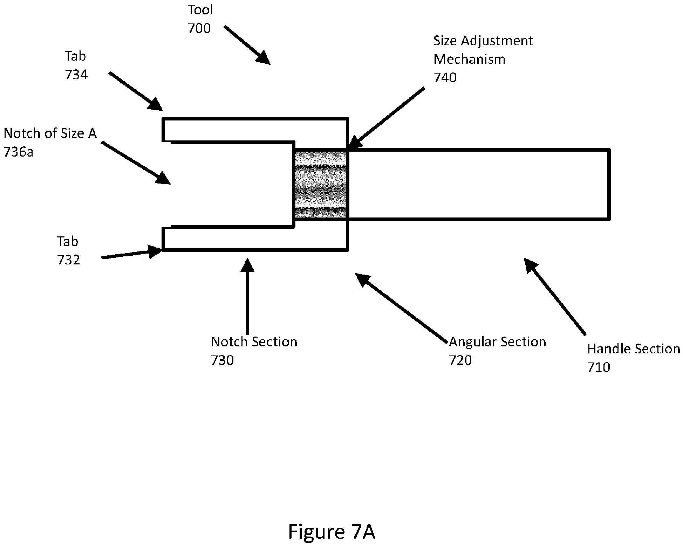

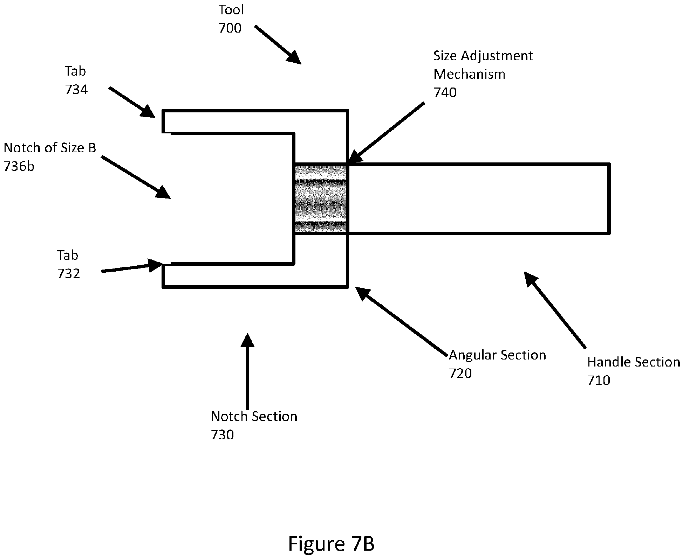

FIGS. 7A-7B illustrate a top view of an exemplary adjustable clamp installation tool 700. The tool 700 includes a handle section 710, an angular section 720, and a notch section 730. The notch section 730 includes tabs 732 and 734 and an adjustable notch A 736a and B 736b. The tool 700 includes a size adjustment mechanism 740 (e.g., worm gear mechanism, adjustment channel mechanism, etc.). The size adjustment mechanism 740 enables the tool 700 to change notches sizes 736a and 736b. In other words, the tool 700 can be utilized for a 10 millimeter wide clamp (e.g., notch of size A 736a illustrated in FIG. 7A) and a 20 millimeter wide clamp (e.g., notch of size B 736b illustrated in FIG. 7B).

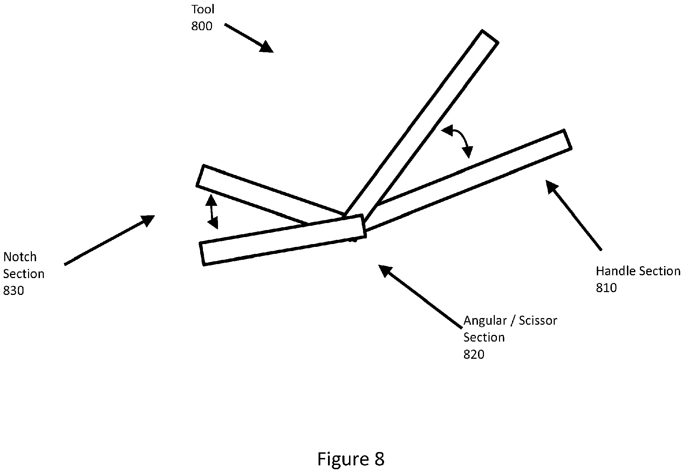

FIG. 8 illustrates a side view of an exemplary scissor-type clamp installation tool 800. The tool 800 includes a notch section 830, an angular/scissor section 820, and a handle section 810. The notch section 830 includes a top part (i.e., top part of the pocket) and a bottom part (i.e., bottom part of the pocket) that form the pocket when closed. The angular/scissor section 820 includes a connection mechanism (e.g., pin, lever device, etc.) for the inter-connection of the notch section 830 and the handle section 810 and the pivot of the notch section 830 and the handle section 810 (e.g., the notch section 830 is closed when the handle section 810 is closed, the notch section 830 is open when the handle section 810 is open, etc.). The handle section 810 includes a top part and a bottom part to provide leverage to close the top part and the bottom part of the notch section on a flange of a clamp. The scissor-type clamp installation tool 800 enables the clamp to be clamped together around the pipe and/or cable (i.e., closed) and the closed clamp to be installed on a mounting surface.

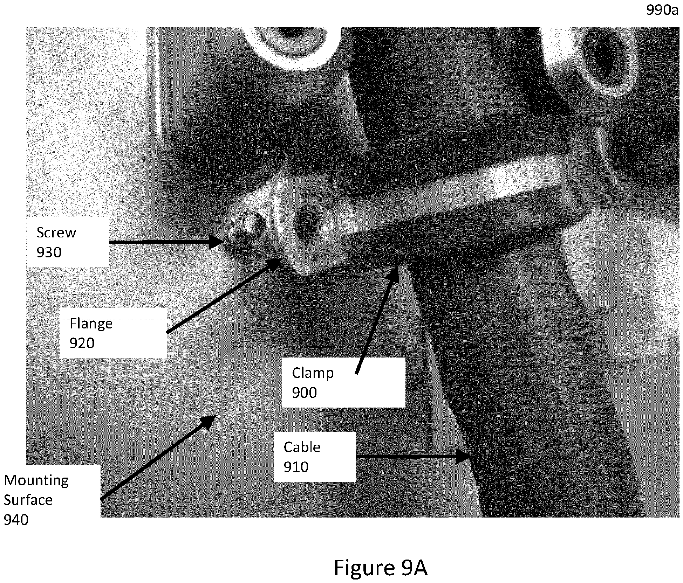

FIGS. 9A-9G illustrate another exemplary installation process of a clamp on a cable using a clamp installation tool 960. The installation process includes one or more of the following steps.

1. The clamp 900 is located (990a) on the cable or bundle 910 at the appropriate location along its length as illustrated in FIG. 9A.

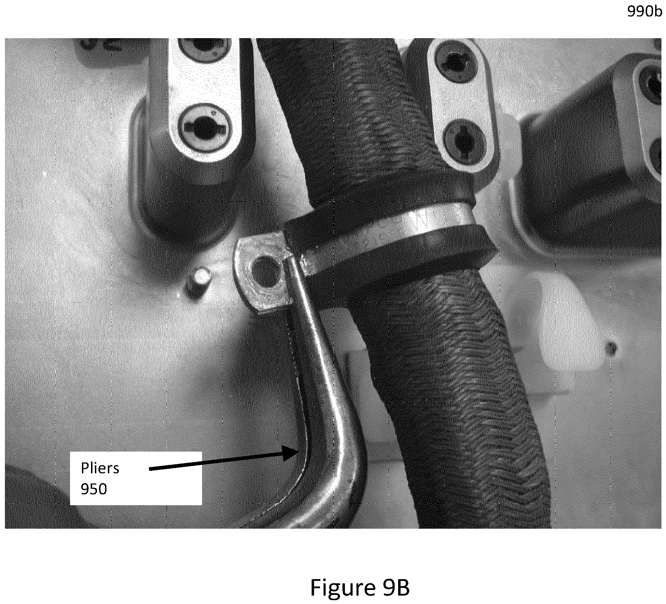

2. Pliers and/or any other tool 950 can be used to squeeze (990b) the clamp 900 closed on the cable 910 as illustrated in FIG. 9B.

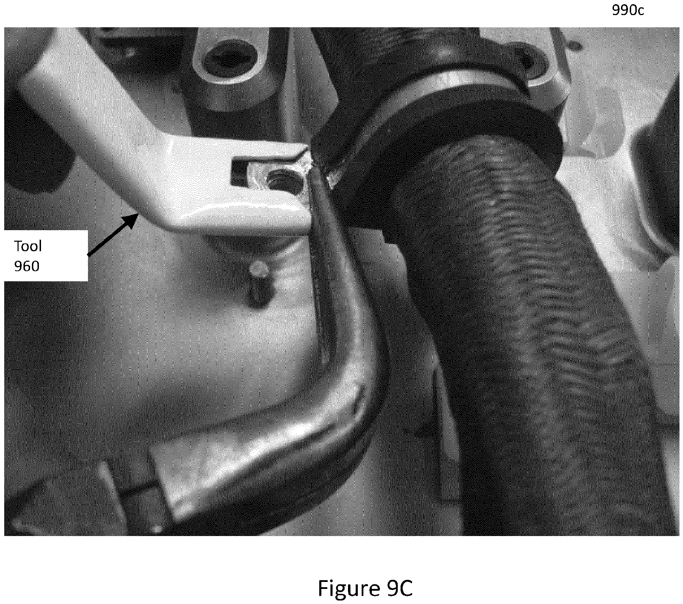

3. The tool 960 is placed (990c) over the flanges 920 (also referred to as tabs) of the closed clamp 900 as illustrated in FIG. 9C.

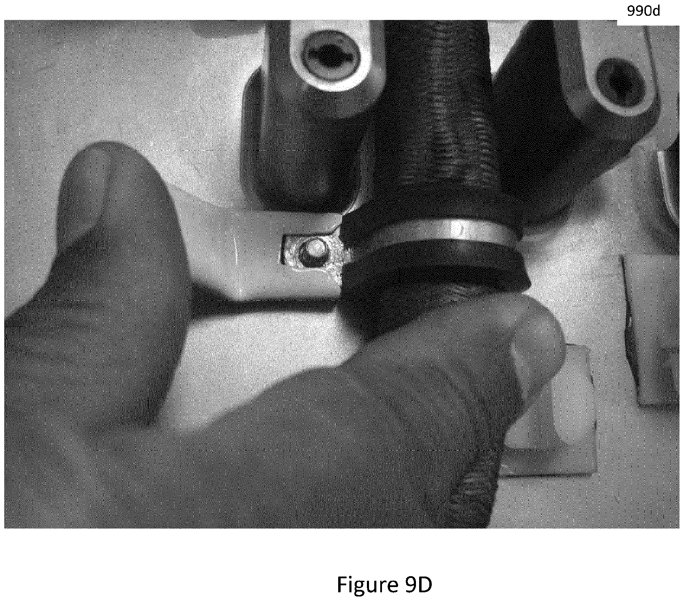

4. The tool 960 is used to position (990d) the clamp 900 over the appropriate threaded screw 930 and onto a mounting surface 940 as illustrated in FIG. 9D.

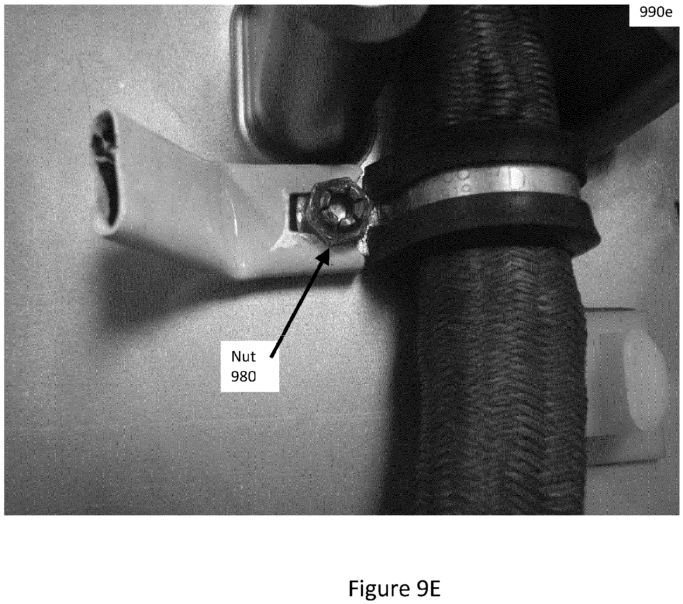

5. The attachment nut 980 is partially installed (990e) on the threaded screw 930 as illustrated in FIG. 9E.

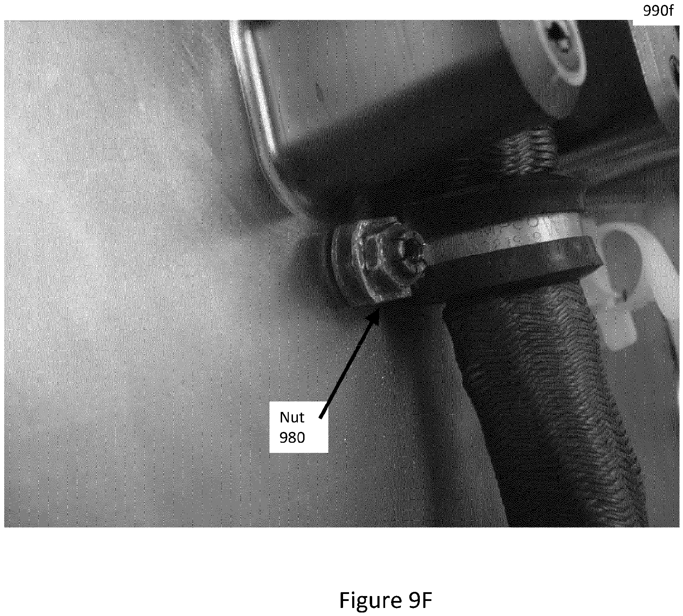

6. The tool 960 is slid out (990f) from the clamp 900, with the nut 980 providing the force to keep the clamp 900 from springing open as illustrated in FIG. 9F.

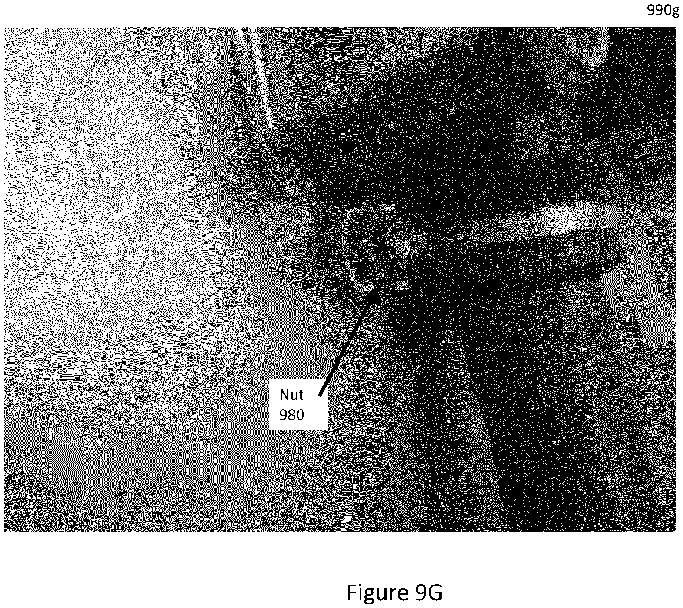

7. The nut 80 is torque (990g), utilizing a nut tightening device (e.g., wrench, pliers, etc.) to the appropriate value as illustrated in FIG. 9G.

In some examples, the placement of the tool over the flanges of the loop clamp securely maintains the flanges together for positioning the loop clamp on and in engagement with the mounting surface and allowing the connection mechanism to be tightened for securing the loop clamp to the mounting surface.

In other examples, the torque (990g) of the nut 80 can secure the clamp 900 to the mounting surface 940. In other words, the tightening of the connection mechanism onto the mounting surface secures the loop clamp to the mounting surface.

Although the clamp 900 described herein is illustrated as a single-sided flange clamp, the tool 960 can be utilized during the installation process of any type of clamp (e.g., double-sided clamp, hose clamp, etc.). Although the clamp 900 described herein attaches to a cable and/or a pipe, the clamp can attach to any type of mechanism that needs to be secured (e.g., string, rope, wire, bundle, etc.).

In other examples, the clamp installation tool includes a pocket, the pocket comprising a notch and two tabs; an angular section connected to the pocket; and a handle section connected to the angular section.

In some examples, the clamp installation tool includes a notch section, the notch section comprising a notch and two tabs; an angular section connected to the notch section; and a handle section connected to the angular section.

In other examples, the two tabs engage a flange of a clamp.

In some examples, the notch enables an installation of a mounting mechanism.

In other examples, the angular section is flexible.

In some examples, the clamp installation device includes means for engaging a flange of a clamp in a closed position (e.g., tabs on the device); and means for holding the tool on a mounting surface during an installation of a mounting mechanism (e.g., handle of the device).

In other examples, a clamp is installed via a method. The method includes placing a clamp installation tool over flanges of the clamp; positioning the clamp over a mounting mechanism via the clamp installation tool; mounting the clamp to a mounting surface via the mounting mechanism; and removing the clamp installation tool from the clamp.

One skilled in the art will realize the invention may be embodied in other specific forms without departing from the spirit or essential characteristics thereof. The foregoing embodiments are therefore to be considered in all respects illustrative rather than limiting of the invention described herein. Scope of the invention is thus indicated by the appended claims, rather than by the foregoing description, and all changes that come within the meaning and range of equivalency of the claims are therefore intended to be embraced therein.

## Claims

1. A clamp installation tool, the tool comprising:
a notch section adapted to capture an engagement end of a loop clamp in a closed position and adapted to capture a mounting mechanism for engaging the loop clamp to a mounting surface; and
a handle section angularly connected to the notch section and adapted to hold the closed loop clamp on the mounting surface.

2. The tool of claim 1, further comprising an angular section adapted to angularly connect the handle section to the notch section and align the loop clamp with the mounting mechanism.

3. The tool of claim 1 or claim 2, wherein a top flange of the loop clamp abuts a bottom flange of the loop clamp when the notch section captures the engagement end of the loop clamp in the closed position.

4. The tool of any preceding claim, wherein the notch section is approximately axially aligned to a top hole of a loop clamp and a bottom hole of the loop clamp upon the notch section engaging the loop clamp.

5. The tool of any preceding claim, wherein the tool is constructed as a single unitary piece.

6. A clamp installation tool, the tool comprising:
a notch section, the notch section comprising:
two opposed tabs, each tab having three walls defining a cavity adapted to engage a flange of a loop clamp in a closed position and spaced apart at a first distance;
a notch having an opening sized to the first distance and adapted to accept a connection mechanism adapted to secure the loop clamp to a mounting mechanism, and
a handle section connected to the notch section and including a linear shaft extending away from the notch section.

7. The tool of claim 6, further comprising an adjustable mechanism connected to the two opposed tabs and adapted to modify the first distance by moving one or more of the two opposed tabs.

8. The tool of claim 6 or claim 7, wherein the two opposed tabs hold the flange of the loop clamp for securely maintaining the loop clamp on and in engagement with the mounting surface and allowing the connection mechanism to be tightened for securing the loop clamp to the mounting surface.

9. The tool of any one of clams 6 to 8, wherein the two opposed tabs cradle the flange of the loop clamp allowing the notch section to sit flush with the mounting surface.

10. The tool of any one of claims 6 to 9, wherein the tool is constructed as a single unitary piece.

11. A method for installing a loop clamp, the method comprising:
placing a clamp installation tool over flanges of the loop clamp in a closed position;
positioning the loop clamp on a mounting surface via the clamp installation tool;
mounting the loop clamp to the mounting surface via a connection mechanism; and
removing the clamp installation tool from the loop clamp.

12. The method of claim 11, wherein the placing the clamp installation tool over the flanges of the loop clamp securely maintains the flanges together for positioning the loop clamp on and in engagement with the mounting surface and allowing the connection mechanism to be tightened for securing the loop clamp to the mounting surface.

13. The method of claim 11 or claim 12, further comprising tightening the connection mechanism onto the mounting surface to secure the loop clamp to the mounting surface.
